# EUROPÄISCHE PATENTANMELDUNG

(11) **EP 4 083 136 A1**
(43) Veröffentlichungstag der Anmeldung: **02.11.2022**
(21) Anmeldenummer: 21171583.4
(22) Anmeldetag: 30.04.2021
(51) Int. Cl.: C08L 69/00

(54) **POLYCARBONAT-ZUSAMMENSETZUNGEN MIT ZINKSULFID ALS WEISSPIGMENT**

(71) Anmelder: Covestro Deutschland AG, 51373 Leverkusen (DE)
(72) Erfinder: WEHRMANN, Rolf, 47800 Krefeld (DE); HEUER, Helmut Werner, 57074 Siegen (DE); BOUMANS, Anke, 47551 Bedburg-Hau (DE)
(74) Vertreter: Levpat

(57) **Zusammenfassung**

Beschrieben ist die Verwendung von mit Carbonsäureanhydrid modifiziertem Polyolefin mit einer Säurezahl von mindestens 40 mg KOH/g zur Reduzierung der Schmelzeviskosität, Erhöhung der Schmelzestabilität und Erhöhung der Reflexion in Zinksulfidhaltigen Polycarbonat-Zusammensetzungen. Das Zinksulfid wirkt als Weißpigment. Entsprechende Zusammensetzungen finden beispielsweise als eingefärbte Gehäuseteile im EE-Bereich Anwendung.

## Beschreibung

Die Erfindung betrifft Weißpigment-haltige, thermoplastische Zusammensetzungen mit aromatischem Polycarbonat als Basismaterial und die Stabilisierung solcher Zusammensetzungen.

Thermoplastische Zusammensetzungen sind für eine Vielzahl von Anwendungen geeignet und eine beliebte Materialalternative, da sie gut verarbeitbar sind und vergleichsweise einfach in die unterschiedlichsten Formteile überführt werden können.

Polycarbonat ist dabei ein besonders interessantes Material, da es eine hohe Wärmeformbeständigkeit und eine hohe Zähigkeit bei Raumtemperatur aufweist. Es lässt sich in unterschiedlichsten Materialerscheinungsformen bereitstellen. Je nach Rezepturbestandteilen sind optisch unterschiedlichste Materialien mit breiten Eigenschaftsprofilen hinsichtlich der thermischen, rheologischen und mechanischen Eigenschaften erreichbar. Die Einsatzmöglichkeiten von Polycarbonat sind entsprechend vielfältig, beispielsweise im Automobilbereich, für Schienenfahrzeuge, für den Bausektor, im Bereich Elektro/Elektronik/IT, für Haushaltsgeräte oder im Bereich der Medizintechnik.

Polycarbonat-Zusammensetzungen enthalten häufig ein Weißpigment. Weißpigmente bilden beispielsweise eine wesentliche Komponente, wenn opake Zusammensetzungen farbig eingefärbt sein sollen, insbesondere für Gehäuseteile oder Bauteile aus dem Haushalts- oder Automobilbereich. Hier reichen üblicherweise geringe Mengen an Weißpigment aus. Weißpigment-haltige Zusammensetzungen werden aber auch dort eingesetzt, wo gute Reflexionseigenschaften gefordert sind, insbesondere sind das Materialien für Reflektoren, solche von Lampen, etwa von LED-Lampen oder LED-Arrays, insbesondere auch im Indoor- und Outdoor-Beleuchtungsbereich für Reflektoren sowie im Automotive-Bereich, etwa für Scheinwerferreflektoren. Derartige Zusammensetzungen, die üblicherweise größere Mengen an Weißpigment enthalten, werden auch als "Reflective White"-Zusammensetzungen bezeichnet. Sie stellen eine neue Alternative zu metallisierten Reflektoren dar.

Als Weißpigment für Polycarbonat-basierte Zusammensetzungen hat sich Titandioxid etabliert, da sich mit diesem Weißpigment eine hohe Farbbrillanz erzielen lässt. Für den Einsatz in Polycarbonat gibt es optimierte Titandioxidtypen, wie sie in DE 102008058351 A1 beschrieben sind. Im Handel befindliche, für Polycarbonat optimierte Titandioxidtypen sind beispielsweise Kronos 2230 und Kronos 2233 (Kronos Worldwide Inc.).

Versuche, Titandioxid durch andere Weißpigmente wie Bariumsulfat, Kaolin, Zinksulfid etc. zu ersetzen, zeigten, dass sich hierdurch die Farbstabilität nicht verbessern lässt bzw. sich die nötige Farbbrillanz nicht erreichen lässt. Der Einsatz von Zinksulfid als Weißpigment in Polycarbonat kam bisher nicht in Frage, weder für Reflective-White-Zusammensetzungen mit hohen Weißpigmentgehalten noch für normale Einfärbungen mit geringen Mengen von Weißpigment. Zinksulfid-haltige Polycarbonat-Zusammensetzungen zeigen nämlich gegenüber Titandioxidhaltigen Polycarbonat-Zusammensetzungen deutlich höhere Yellowness-Index-Werte und auch signifikant niedrigere Reflexionswerte. Das Zinksulfid sorgt für einen starken Abbau des Polycarbonats verbunden mit starker Schmelzeinstabilität und somit ist die gegenwärtig herrschende Meinung, dass bei allen opaken Farben, zu deren Einstellung ein Weißpigment benötigt wird, sowie bei Reflective White-Zusammensetzungen somit der Einsatz von Titandioxid zwingend erforderlich ist.

Um Zinksulfid als Weißpigment für Polycarbonat-Zusammensetzungen zu erschließen, bestand daher die Aufgabe, die Reflexion und die Schmelzestabilität der Zusammensetzungen zu verbessern und den Polymerabbau bei Zinksulfid enthaltenden Polycarbonatzusammensetzungen zu verringern.

Überraschend hat sich gezeigt, dass dieses durch den Zusatz geringer Mengen von mit Carbonsäureanhydrid modifizierten Polyolefin mit einer Säurezahl von mindestens 40 mg KOH/g, bestimmt nach JIS K0070:1992-07-31, gelingt. Die Modifizierung von Polyolefinen mit Carbonsäureanhydrid kann in unterschiedlichen technischen Prozessen erfolgen. Bevorzugt wird dabei Maleinsäureanhydrid zur Modifizierung verwendet.

Gegenstand der Erfindung ist somit die Verwendung von mit Carbonsäureanhydrid modifiziertem Polyolefin mit einer Säurezahl von mindestens 40 mg KOH/g, bestimmt nach JIS K0070:1992-07-31, zur Verbesserung der Schmelzestabilität einer Zinksulfid-haltigen Polycarbonat-Zusammensetzung, wobei die Schmelzestabilität vorzugsweise bestimmt wird durch Ermittlung des ΔMVR-Wertes, der die Differenz des MVR-Wertes nach 6 min und des MVR-Wertes nach 19 min ist, und besonders bevorzugt ≤ 3,5 cm³/(10 min), ganz besonders bevorzugt ≤ 2,0 cm³/(10 min) beträgt, wobei die MVR-Werte bestimmt sind nach ISO 1133:2012-03 (bei einer Prüftemperatur von 300 °C, Masse 1,2 kg).

Gegenstand der Erfindung ist daneben die Verwendung von mit Carbonsäureanhydrid modifiziertem Polyolefin mit einer Säurezahl von mindestens 40 mg KOH/g, bestimmt nach JIS K0070:1992-07-31, zur Erniedrigung der Schmelzeviskosität einer Zinksulfid-haltigen Polycarbonat-Zusammensetzung im Vergleich zur einer Polycarbonatzusammensetzung, die das mit Carbonsäureanhydrid modifizierte Polyolefin nicht enthält. Die Schmelzeviskosität wird vorzugsweise ermittelt bei 300°C und einer Belastung von 1,2 kg nach ISO 1133:2012-03. Ein höherer Zahlenwert für den MVR und damit eine niedrigere Schmelzeviskosität bedeuten eine Reduzierung des Molekulargewichtsabbaus von aromatischem Polycarbonat einer solchen Zusammensetzung beim Compoundieren. Compoundieren ist das Beimischen von Zuschlagstoffen, insbesondere von Additiven, zu dem Kunststoff, hier: zu dem aromatischen Polycarbonat. Dies geschieht üblicherweise bei Temperaturen oberhalb von 260°C.

Gegenstand der Erfindung sind außerdem thermoplastische Zusammensetzungen, enthaltend
A) aromatisches Polycarbonat,
B) Zinksulfid,
C) mit Carbonsäureanhydrid modifiziertes Polyolefin mit einer Säurezahl von mindestens 40 mg KOH/g, bestimmt nach JIS K0070:1992-07-31,
und Formteile aus solchen Zusammensetzungen bzw. umfassend Bereiche aus solchen Zusammensetzungen.

Im Rahmen der vorliegenden Erfindung beziehen sich die angegebenen Gew.-% der Komponenten A, B, C und ggf. D - soweit nicht explizit anders angegeben - jeweils auf das Gesamtgewicht der Zusammensetzung. Es versteht sich, dass sämtliche in einer erfindungsgemäßen Zusammensetzung enthaltenen Komponenten zusammen 100 Gew.-% ergeben. Die Zusammensetzung kann neben den Komponenten A, B, C weitere Komponenten, etwa weitere Additive in Form der Komponente D, enthalten. Auch kann die Zusammensetzung einen oder mehrere weitere Thermoplasten als Blendpartner (Komponente E) enthalten, welche durch keine der Komponenten A bis D abgedeckt sind. All diese Komponenten einer Zusammensetzung ergeben die 100 Gew.-%.

Als Blendpartner geeignete, von den Komponenten A und C verschiedene, thermoplastische Polymere sind beispielsweise Polystyrol, Styrol-Copolymere, aromatische Polyester wie Polyethylenterephthalat (PET) oder Polybutylenterephthalat (PBT), PET-Cyclohexandimethanol-Copolymer (PETG), Polyethylennaphthalat (PEN), Polyester mit 2,2,4,4-Tetramethyl-1,3-cyclobutanediol(TMCD)-Struktureneinheiten, PMMA und PMMA-Copolymere sowie Copolymere mit Styrol wie z.B. transparentes Polystyrolacrylnitril (PSAN), thermoplastische Polyurethane. Bevorzugt werden diese Blendpartner in Konzentrationen von 0,5 Gew.-% bis 10 Gew.-% eingesetzt.

Ganz besonders bevorzugt enthalten die vorbeschriebenen Zusammensetzungen aber keine weiteren Komponenten, sondern die Mengen der Komponenten A, B, C und ggf. D, insbesondere in den beschriebenen bevorzugten Ausführungsformen, ergänzen sich zu 100 Gew.-%, d. h. die Zusammensetzungen bestehen aus den Komponenten A, B, C, ggf. D.

Es versteht sich, dass die eingesetzten Komponenten übliche Verunreinigungen, die beispielsweise aus ihren Herstellungsprozessen herrühren, enthalten können. Es ist bevorzugt, möglichst reine Komponenten einzusetzen. Es versteht sich weiterhin, dass diese Verunreinigungen auch bei einer geschlossenen Formulierung der Zusammensetzung enthalten sein können.

Die erfindungsgemäßen Zusammensetzungen werden vorzugsweise zur Herstellung von Formteilen verwendet. Die Zusammensetzungen weisen bevorzugt eine Schmelze-Volumenfließrate (MVR) von 3 bis 60 cm³/(10 min), weiter bevorzugt von 6 bis 40 cm³/(10 min), noch weiter bevorzugt von 8 bis 35 cm³/(10 min), besonders bevorzugt von 9 bis 24 cm³/(10 min), bestimmt nach ISO 1133:2012-3 (Prüftemperatur 300°C, Masse 1,2 kg), auf.

Gegenstand der Erfindung ist auch die Verbesserung der Reflexion, vorzugsweise bestimmt gemäß ASTM E 1331:04 bei einer Schichtdicke von 2 mm, von Zinksulfid-haltigen Polycarbonat-Zusammensetzungen durch den Zusatz von mit Carbonsäureanhydrid modifiziertem Polyolefin mit einer Säurezahl von mindestens 40 mg KOH/g, bestimmt nach JIS K0070:1992-07-31. Die Verbesserung der Reflexion bezieht sich auf die entsprechenden Zusammensetzungen ohne Komponente C.

Es wird bevorzugt zudem auch eine Verbesserung des Yellowness-Index, bevorzugt bestimmt nach ASTM E 313-15 (Beobachter 10° / Lichtart: D65) an Musterplatten mit einer Schichtdicke von 2 mm, erzielt, was sich insbesondere durch Zusatz von mit Maleinsäureanhydrid-modifiziertem Ethylen-Propylen-1-Octen-Polymer, insbesondere mit einem mit einem gewichtsmittleren Molekulargewicht M_{w} von 4000 bis 10000 g/mol, bestimmt durch Gelpermeationschromatographie in ortho-Dichlorbenzol bei 150 °C mit Polystyrolkalibrierung, erreichen lässt. Auch hier ist die Referenz dieselbe wie vorstehend beschrieben, also die jeweils entsprechende Zusammensetzung ohne Komponente C (damit mit entsprechend höherem Polycarbonatanteil). Komponente C bewirkt nicht nur eine Verbesserung der Reflexion, sondern gleichzeitig wird in der Regel auch der Abbau bei der Compoundherstellung verringert und die Schmelze während des Spritzgussprozesses stabilisiert, was eine herausragende Kombination von Effekten darstellt.

Die Reflexion der Zusammensetzungen, bei denen die Reflexion durch den Zusatz der Komponente C noch weiter verbessert wird, beträgt nach dem Zusatz der Komponente C bevorzugt mindestens 88 %, weiter bevorzugt mindestens 90 %, bestimmt nach ASTM E 1331:04 bei einer Schichtdicke von 2 mm.

Die als bevorzugt, besonders bevorzugt etc. für die Zusammensetzung genannten Merkmale gelten selbstverständlich auch in Hinblick auf die erfindungsgemäßen Verwendungen.

Die einzelnen Komponenten sind nachfolgend näher beschrieben. Bei Zahlenbereichsangaben versteht es sich, dass "bis" den jeweils genannten Grenzwert, einschließlich seines Rundungsbereiches, einschließt. Ebenso versteht sich, dass es sich bei den Komponenten auch um Mischungen verschiedener Vertreter der jeweiligen Spezies handeln kann, also z.B. eine Mischung unterschiedlicher aromatischer Polycarbonate oder eine Mischung unterschiedlicher mit Carbonsäureanhydrid modifizierter Polyolefine gemäß Komponente C.

### Komponente A

Unter "Polycarbonat" im erfindungsgemäßen Sinne werden sowohl aromatische Homopolycarbonate als auch aromatische Copolycarbonate verstanden. Dabei können die Polycarbonate in bekannter Weise linear oder verzweigt sein.

Die Herstellung der Polycarbonate, die in den Zusammensetzungen enthalten sind, erfolgt in bekannter Weise aus Dihydroxyarylverbindungen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117 bis 299 verwiesen.

Die Herstellung aromatischer Polycarbonate erfolgt z.B. durch Umsetzung von Dihydroxyarylverbindungen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Dihydroxyarylverbindungen mit beispielsweise Diphenylcarbonat möglich.

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine, abgeleitet von Isatin- oder Phenolphthaleinderivaten, sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1, 1-Bis-(4-hydroxyphenyl)-3,3,5-trimethylcyclohexan, sowie die Bisphenole (I) bis (III) 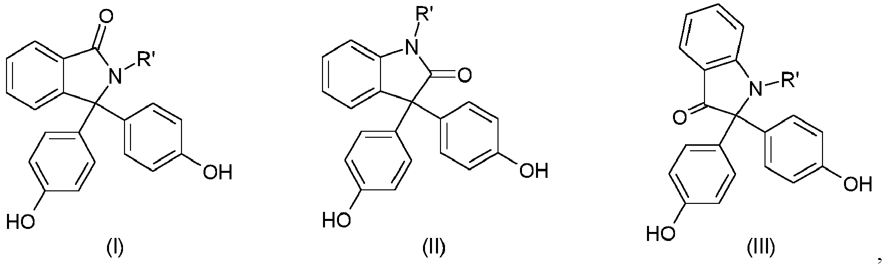 in denen R' jeweils für C₁- bis C₄-Alkyl, Aralkyl oder Aryl, bevorzugt für Methyl oder Phenyl, ganz besonders bevorzugt für Methyl, steht.

Besonders bevorzugte Bisphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan, 4,4'-Dihydroxydiphenyl und Dimethyl-Bisphenol A sowie die Bisphenole der Formeln (I), (II) und (III).

Diese und weitere geeignete Dihydroxyarylverbindungen sind z.B. in US 3 028 635 A, US 2 999 825 A, US 3 148 172 A, US 2 991 273 A, US 3 271 367 A, US 4 982 014 A und US 2 999 846 A, in DE 1 570 703 A, DE 2063 050 A, DE 2 036 052 A, DE 2 211 956 A und DE 3 832 396 A, in FR 1 561 518 A, in der Monographie "H. Schnell, Chemistry and Physics of Polycarbonates, Interscience Publishers, New York 1964" sowie in JP 62039/1986 A, JP 62040/1986 A und JP 105550/1986 A beschrieben.

Im Fall der Homopolycarbonate wird nur eine Dihydroxyarylverbindung eingesetzt, im Fall der Copolycarbonate werden mehrere Dihydroxyarylverbindungen eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit C₁- bis C₃₀-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol. Die Menge an einzusetzendem Kettenabbrecher beträgt bevorzugt 0,1 bis 5 Mol-%, bezogen auf Mole an jeweils eingesetzten Dihydroxyarylverbindungen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Dihydroxyarylverbindungen.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt.

Besonders bevorzugte Polycarbonate sind das Homopolycarbonat auf Basis von Bisphenol A, die Copolycarbonate auf Basis von 1,1-Bis-(4-hydroxyphenyl)-3,3,5-trimethylcyclohexan und 4,4'-Dihydroxydiphenyl sowie die Copolycarbonate auf Basis der beiden Monomere Bisphenol A und 1,1-Bis-(4-hydroxyphenyl)-3,3,5-trimethylcyclohexan, sowie von den Dihydroxyarylverbindungen der Formeln (I), (II) und (III) 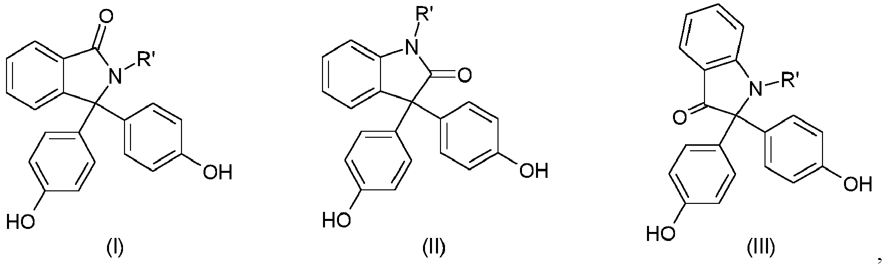 in denen R' jeweils für C₁- bis C₄-Alkyl, Aralkyl oder Aryl, bevorzugt für Methyl oder Phenyl, ganz besonders bevorzugt für Methyl, steht,
abgeleitete Homo- oder Copolycarbonate, insbesondere mit Bisphenol A. Ganz besonders bevorzugt wird Bisphenol A basiertes Polycarbonat eingesetzt.

Bevorzugt sind auch Copolycarbonate, zu deren Herstellung Diphenole der allgemeinen Formel (la) eingesetzt wurden: 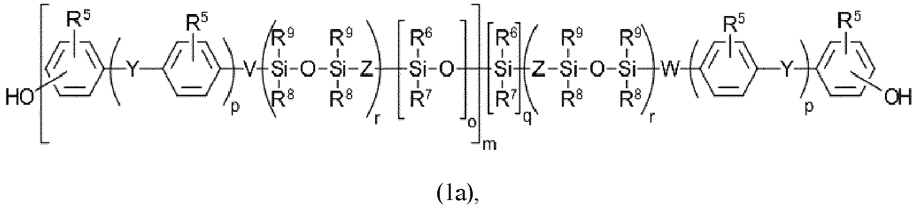 wobei
R⁵ für Wasserstoff oder C₁- bis C₄- Alkyl, C₁- bis C₃-Alkoxy, vorzugsweise für Wasserstoff; Methoxy oder Methyl, steht,
R⁶, R⁷, R⁸ und R⁹ jeweils unabhängig voneinander für C₁- bis C₄-Alkyl oder C₆- bis C₁₂-Aryl, vorzugsweise für Methyl oder Phenyl stehen,
Y für eine Einfachbindung, SO₂-, -S-, -CO-, -O-, C₁- bis C₆-Alkylen, C₂- bis C₅-Alkyliden, C₆- bis C₁₂-Arylen, welches gegebenenfalls mit weiteren Heteroatome enthaltenden aromatischen Ringen kondensiert sein kann oder für einen C₅- bis C₆-Cycloalkylidenrest, der ein- oder mehrfach mit C₁-bis C₄-Alkyl substituiert sein kann, bevorzugt für eine Einfachbindung, -O-, Isopropyliden oder für einen C₅- bis C₆-Cycloalkylidenrest, der ein- oder mehrfach mit C₁- bis C₄-Alkyl substituiert sein kann, steht,
V für Sauerstoff, C₂- bis C₆-Alkylen oder C₃- bis C₆-Alkyliden, bevorzugt für Sauerstoff oder C₃-Alkylen,
p, q und r jeweils unabhängig für 0 oder 1 stehen,
wenn q = 0 ist, W für eine Einfachbindung steht, wenn q = 1 und r = 0 ist, W für Sauerstoff, C₂- bis C₆-Alkylen oder C₃- bis C₆-Alkyliden, bevorzugt für Sauerstoff oder C₃-Alkylen steht,
wenn q = 1 und r = 1 ist, W und V jeweils unabhängig für C₂- bis C₆-Alkylen oder C₃- bis C₆-Alkyliden, bevorzugt C₃-Alkylen steht,
Z für ein C₁- bis C₆-Alkylen, bevorzugt C₂-Alkylen steht, o für eine durchschnittliche Anzahl von Wiederholungseinheiten von 10 bis 500, bevorzugt 10 bis 100 steht, und
m für eine durchschnittliche Anzahl von Wiederholungseinheiten von 1 bis 10, bevorzugt 1 bis 6, weiter bevorzugt 1,5 bis 5 steht. Ebenso ist es möglich, dass Diphenole verwendet werden, in denen zwei oder mehrere Siloxanblöcke der allgemeinen Formel (1a) über Terephthalsäure und/oder Isophthalsäure miteinander unter Ausbildung von Estergruppen verknüpft sind.

Insbesondere bevorzugt sind (Poly)Siloxane der Formeln (2) und (3) 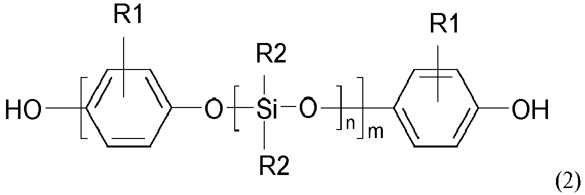 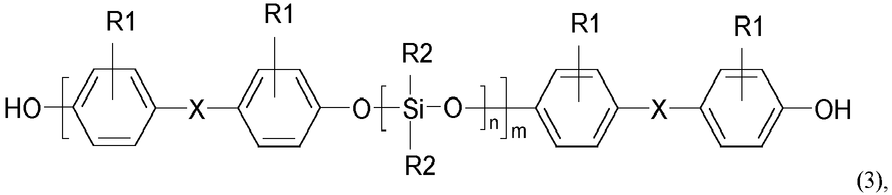
wobei R1 für Wasserstoff, C₁- bis C₄-Alkyl, vorzugsweise für Wasserstoff oder Methyl steht und insbesondere bevorzugt für Wasserstoff,
R2 unabhängig voneinander für Aryl oder Alkyl, bevorzugt für Methyl,
X für eine Einfachbindung, -SO₂-, -CO-, -O-, -S-, C₁- bis C₆-Alkylen, C₂- bis C₅-Alkyliden oder für C₆- bis C₁₂-Arylen, welches gegebenenfalls mit weiteren Heteroatome enthaltenden aromatischen Ringen kondensiert sein kann, steht,
X bevorzugt für eine Einfachbindung, C₁- bis C₅-Alkylen, C₂- bis C₅-Alkyliden, C₅- bis C₁₂-Cycloalkyliden, -O-, -SO- -CO-, -S-, -SO₂-, besonders bevorzugt steht X für eine Einfachbindung, Isopropyliden, C₅- bis C₁₂-Cycloalkyliden oder Sauerstoff, und ganz besonders bevorzugt für Isopropyliden steht,
n eine durchschnittliche Zahl von 10 bis 400, bevorzugt 10 und 100, insbesondere bevorzugt 15 bis 50 bedeutet und
m für eine durchschnittliche Zahl von 1 bis 10, bevorzugt von 1 bis 6 und insbesondere bevorzugt von 1,5 bis 5 steht.

Ebenso bevorzugt kann der Siloxanblock von folgender Struktur abgeleitet sein 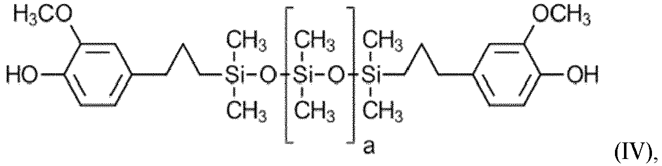 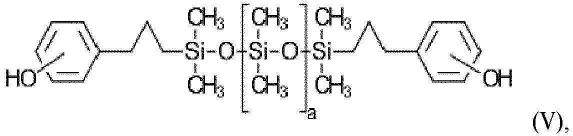 bevorzugt (Va) 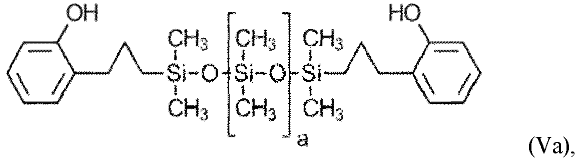 oder 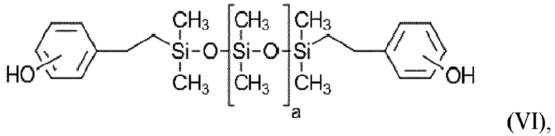 wobei a in Formel (IV), (V) und (VI) für eine durchschnittliche Zahl von 10 bis 400, bevorzugt 10 bis 100 und besonders bevorzugt für 15 bis 50 steht.

Dabei ist es ebenso bevorzugt, dass mindestens zwei gleiche oder verschiedene der Siloxanblöcke der allgemeinen Formeln (IV), (V) oder (VI) über Terephthalsäure und/oder Isophthalsäure miteinander unter Ausbildung von Estergruppen verknüpft sind.

Ebenso ist es bevorzugt, wenn in der Formel (la) p = 0 ist, V für C₃-Alkylen steht, r = 1 ist, Z für C₂-Alkylen steht, R⁸ und R⁹ für Methyl stehen, q = 1 ist, W für C₃-Alkylen steht, m = 1 ist, R⁵ für Wasserstoff oder C₁- bis C₄-Alkyl, vorzugsweise für Wasserstoff oder Methyl, steht, R⁶ und R⁷ jeweils unabhängig voneinander für C₁- bis C₄-Alkyl, vorzugsweise für Methyl stehen und o für 10 bis 500 steht.

Copolycarbonate mit Monomereinheiten der Formel (la) und insbesondere auch deren Herstellung sind in der WO 2015/052106 A2 beschrieben.

Copolycarbonate mit Monomereinheiten der Formel (IV) und insbesondere auch deren Herstellung sind in der WO 2015/052106 A2 beschrieben.

Die thermoplastischen Polycarbonate einschließlich der thermoplastischen, aromatischen Polyestercarbonate haben bevorzugt gewichtsmittlere Molekulargewichte M_{w} von 15.000 g/mol bis 40.000 g/mol, weiter bevorzugt bis 34.000 g/mol, besonders bevorzugt von 17.000 g/mol bis 33.000 g/mol, insbesondere von 19.000 g/mol bis 32.000 g/mol, ermittelt durch Gelpermeationschromotographie, kalibriert gegen Bisphenol A-Polycarbonat Standards unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Verwendung einer UV- und/oder RI-Detektion.

### Komponente B

Die erfindungsgemäßen Zusammensetzungen enthalten als Komponente B das Weißpigment Zinksulfid. Es kann grundsätzlich natürlich vorkommendes als auch synthetisch hergestelltes Zinksulfid verwendet werden, wobei das synthetisch hergestellte aufgrund der allgemein höheren Reinheit bevorzugt ist.

Erfindungsgemäße Zusammensetzungen enthalten 1 bis 20 Gew.-%, bevorzugt 4 bis 15 Gew.-%, weiter bevorzugt 5 bis 15 Gew.-%, besonders bevorzugt 8 bis 12 Gew.-% Zinksulfid.

Das Zinksulfid gemäß Komponente B der erfindungsgemäßen Zusammensetzungen weist bevorzugt eine mittlere Partikelgröße D₅₀, bestimmt mittels Rasterelektronenmikroskopie (SEM), von 0,1 µm bis 1,0 µm, bevorzugt 0,2 µm bis 0,7 µm, besonders bevorzugt 0,25 µm bis 0,5 µm auf.
Weiter bevorzugt ist zudem der D₉₀-Wert < 0,7 µm, besonders bevorzugt ≤ 0,6 µm, und der D₁₀-Wert < 0,25 µm.Die Bestimmung wird bevorzugt durchgeführt, wie im Beispielteil zu Komponente B-1 beschrieben.

Das erfindungsgemäß eingesetzte Zinksulfid ist ein Weißpigment. Farbige Zinksulfide enthalten neben Zink noch Elemente wie Sb, Ni, Cr, Ba, Mg, Ca, Co oder Fe, so dass sich ein leicht anderer Farbeindruck als "weiß" ergeben kann. Es versteht sich, dass beim Weißpigment Zinksulfid auch Spuren anderer Elemente als Verunreinigungen enthalten sein können. Diese Mengen sind jedoch so gering, dass das Zinksulfid hierdurch keinen Farbstich bekommt.

Das eingesetzte Zinksulfid weist bevorzugt eine Reinheit von mindestens 99,5 Gew.-% auf, noch weiter bevorzugt von 99,9 Gew.-%.

### Komponente C

Die Komponente C im Sinne der vorliegenden Erfindung ist ein mit Carbonsäureanhydrid modifiziertes Polyolefin mit einer Säurezahl, bestimmt nach JIS K0070:1992-07-31, von mindestens 40 mg KOH/g, bevorzugt mindestens 50 mg KOH/g. Besonders bevorzugt beträgt die Säurezahl 50 bis 80 mg KOH/g. Es kann sich auch um eine Mischung verschiedener Polymere handeln, welche die Merkmale der Komponente C aufweisen.

Das Polyolefin enthält vorzugsweise mindestens einen Baustein ausgewählt aus der Gruppe, bestehend aus Ethylen und/oder einem oder mehreren der alpha-Olefine 1-Propen, 1-Buten, 1-Isobuten, 1-Penten, 1-Hexen, 1-Hepten, 1-Octen, 1-Nonen, 1-Decen, 1-Undecen, 1-Dodecen, 1-Tridecen, 1-Tetradecen, 1-Octadecen, 1-Nonadecen. Besonders bevorzugt umfasst das Polyolefin mindestens einen Baustein, welcher ausgewählt ist aus der Gruppe, bestehend aus Ethylen, 1-Propen, 1-Octen.

Bei den Anhydriden, die zur Modifizierung verwendet sind, handelt es sich um Carbonsäureanhydride. Bevorzugtes Anhydrid zur Modifizierung des Polyolefins ist ein ungesättigtes Carbonsäureanhydrid, welches weiter bevorzugt ausgewählt ist aus Maleinsäureanhydrid, Fumarsäureanhydrid, Itaconsäureanhydrid und deren Mischungen. Besonders bevorzugt ist das Polyolefin Maleinsäureanhydrid-modifiziert. Ein solches Anhydrid kann alleine oder in Mischung mit anderen Anhydriden zur Modifizierung verwendet werden. "Modifiziert" bedeutet hierbei vorzugsweise, dass das Carbonsäureanhydrid aufgepfropft ist.

Das mit Carbonsäureanhydrid modifizierte Polyolefin ist bevorzugt kautschukfrei.

Bevorzugt umfasst das mit Carbonsäureanhydrid modifizierte Polyolefin
Ca) 90,9-98,0 Gew.-%, vorzugsweise 92,0-97,5 Gew.-%, besonders bevorzugt 94,0-97,0 Gew.-% Polyolefin und
Cb) 2,0 -10,0 Gew.-%, vorzugsweise 2,5-8,0 Gew.-%, besonders bevorzugt 3,0-6,0 Gew.-% Carbonsäureanhydrid.

Bevorzugt ist der olefinische Teil Ca des Polyolefins ein Ethen-Propen-1-Octen-Polymer.

Ebenso bevorzugt ist der olefinische Teil Ca des Polyolefins ein Polymer aus Propylen und/oder Ethylen.

Ganz besonders bevorzugt ist als Komponente C ein Maleinsäureanhydrid-modifiziertes Propylen-Polymer, Ethylenen-Propylen-1-Octen-Polymer, Ethylen-Propylen-Polymer oder eine Mischung hiervon enthalten, ganz besonders bevorzugt ist ein solches Polyolefin bzw. eine Mischung aus ihnen das einzige Polyolefin gemäß Komponente C in der Gesamtzusammensetzung.

Ein besonders bevorzugtes Ethen-Propen-1-Octen-Polymer weist folgende Zusammensetzung des olefinischen Teils auf:
Ethylenanteil 80,0-96,0 Gew.-%, bevorzugt 84,0-92,0 Gew.-%,
Propylenanteil 2,0-10,0 Gew.-%, bevorzugt 4,0-8,0 Gew.-% und
Octenanteil 2,0-10,0 Gew.-%, bevorzugt 4,0-8,0 Gew.-%, wobei sich die Gew.-%-Angaben auf den olefinischen Teil, ohne Carbonsäureanhydridmodifizierung, beziehen.

Das gewichtsmittlere Molekulargewicht M_{w} des mit Carbonsäureanhydrid modifizierten Polyolefins beträgt vorzugsweise 4000 bis 40000 g/mol, weiter bevorzugt 4500 bis 32000 g/mol, insbesondere bis 25000 g/mol. bestimmt mittels Gelpermeationschromatographie in ortho-Dichlorbenzol bei 150°C mit Polystyrolkalibrierung, wobei der angegebene Wert bevorzugt ein Mittelwert aus einer Doppelbestimmung ist.

Ganz besonders bevorzugt beträgt bei einer Säurezahl von 40 mg bis < 65 mg KOH/g, bestimmt nach JIS K0070:1992-07-31, das Molekulargewicht M_{w} 4000 bis 10000 g/mol, während bei einer Säurezahl von 65 bis 80 mg KOH/g das Molekulargewicht M_{w}, bestimmt durch Gelpermeationschromatographie in ortho-Dichlorbenzol bei 150 °C mit Polystyrolkalibrierung, bevorzugt 18000 bis 25000 g/mol beträgt.

Der Kristallinitätsgrad des mit Carbonsäureanhydrid modifizierten Polyolefins gemäß Komponente C, bestimmt mittels Röntgenbeugung, liegt bevorzugt bei mindestens 55%.

Die Erweichungstemperatur des mit Carbonsäureanhydrid modifizierten Polyolefins gemäß Komponente C, bestimmt gemäß JIS K2207:2015-10-20, ist bevorzugt < 160°C und liegt weiter bevorzugt im Bereich von 105°C bis 110°C.

Erfindungsgemäß bevorzugt werden 0,1 bis 2,5 Gew.-%, weiter bevorzugt 0,2 bis 2,0 Gew.-%, besonders bevorzugt 0,2 bis < 2,0 Gew.-%, ganz besonders bevorzugt 0,5 bis 1,5 Gew.-% mit Maleinsäureanhydrid modifiziertes Polyolefin gemäß Komponente C eingesetzt. Bei etwa 2,0 Gew.-% kann es neben den positiven Auswirkungen auf Reflexion und Schmelzestabilität zu einer Halbmondbildung am Anguss bei der Spritzgussherstellung von Formkörpern kommen, was sich negativ auf den optischen Gesamteindruck den Formteils auswirkt. Durch Anpassung und Optimierung der Spritzgussparameter wie etwa Temperatur und/oder Einspritzgeschwindigkeit und/ oder durch Anpassung und Optimierung der Bauteilkonstruktion können diese Oberflächenstörungen verringert und ggf. ganz unterdrückt werden.

### Komponente D

Die erfindungsgemäßen Zusammensetzungen können ein oder mehrere von Komponente B und Komponente C verschiedene, weitere Additive enthalten, welche vorliegend unter "Komponente D" zusammengefasst sind.

Es sind optional (0 Gew.-%) bis zu 20 Gew.-%, weiter bevorzugt bis zu 10 Gew.-%, noch weiter bevorzugt 0,1 Gew.-% bis 6,0 Gew.-%, besonders bevorzugt 0,1 Gew.-% bis 3,0 Gew.-%, ganz besonders bevorzugt 0,2 Gew.-% bis 1,0 Gew.-%, insbesondere bis 0,5 Gew.-% sonstige übliche Additive ("weitere Additive") enthalten, wobei sich diese Gewichtsprozente auf das Gesamtgewicht der Zusammensetzung beziehen. Die Gruppe der weiteren Additive umfasst kein Zinksulfid, da dieses bereits als Komponente B beschrieben ist. Die Gruppe der weiteren Additive umfasst auch nicht mit Carbonsäureanhydrid modifiziertes Polyolefin gemäß Komponente C.

Solche weiteren Additive, wie sie üblicherweise Polycarbonaten zugesetzt werden, sind insbesondere Thermostabilisatoren, Antioxidantien, Entformungsmittel, UV-Absorber, IR-Absorber, Schlagzähmodifikatoren, Antistatika, optische Aufheller, von Komponente B verschiedene Füllstoffe, Flammschutzmittel, Antitropfmittel, Lichtstreumittel, Hydrolysestabilisatoren, Umesterungsinhibitoren, (organische) Farbstoffe, (organische/anorganische) Pigmente und/oder Additive zur Lasermarkierung, insbesondere in den für Polycarbonat-basierte Zusammensetzungen üblichen Mengen. Derartige Additive sind beispielsweise in EP 0 839 623 A1, WO 96/15102 A1, EP 0 500 496 A1 oder im "Plastics Additives Handbook", Hans Zweifel, 5th Edition 2000, Hanser Verlag, München beschrieben. Diese Additive können einzeln oder auch im Gemisch zugesetzt werden. Es können insbesondere neben dem Zinksulfid auch weitere Weißpigmente enthalten sein. Sofern ein weiteres Weißpigment in den erfindungsgemäßen Zusammensetzungen enthalten ist, handelt es sich dabei bevorzugt um Titandioxid.

Bevorzugt sind die Additive ausgewählt aus der Gruppe der Thermostabilisatoren, Antioxidantien, Entformungsmittel, Antitropfmittel, Flammschutzmittel, UV-Absorber, IR-Absorber, Schlagzähmodifikatoren, Antistatika, optischen Aufheller, von Komponente B verschiedenen Füllstoffe, Lichtstreumittel, Hydrolysestabilisatoren, Umesterungsinhibitoren, Verträglichkeitsvermittler und/oder Additive zur Lasermarkierung.

Ganz besonders bevorzugt enthalten die Zusammensetzungen mindestens einen Thermostabilisator.

Es versteht sich ferner, dass die Additive je nach Anwendungsziel der Zusammensetzungen auszuwählen sind. Beispielsweise enthalten für Reflektoren bestimmte Reflective White Zusammensetzungen keine Farbstoffe und Pigmente außer ggf. weiteren Weißpigmenten wie Titandioxid. Anderes gilt jedoch für opake, eingefärbte Zusammensetzungen, ebenfalls ein Anwendungsfeld der vorliegenden Erfindung.

Opake, eingefärbte Zusammensetzungen enthalten naturgemäß Farbmittel. "Opak" bedeutet hier bevorzugt eine Lichttransmission im Bereich von 380 bis 780 nm von weniger als 1,0 %, bestimmt bei einer Schichtdicke von 4 mm in Anlehnung an DIN ISO 13468-2:2006 (D65, 10°). "Eingefärbt" bedeutet, dass entsprechende Formteile aus den Zusammensetzungen "farbig" sind, - L ≠ 0, a* ≠ 0, b* ≠ 0 -, also nicht schwarz - L = a* = b = 0 -, nicht weiß - L = 100, a* = b* = 0 - oder aber grau - alles mit L > 0 und <100, a* = b* = 0. Graue Zusammensetzungen sind erfindungsgemäß grundsätzlich auch als weitere Gruppe erfasst, haben diese doch ebenfalls ein Weißpigment als Grundlage, wobei erfindungsgemäße Zusammensetzungen Zinksulfid als Weißpigment enthalten. Solchen Zusammensetzungen ist üblicherweise auch Ruß zugesetzt.

Es versteht sich, dass nur solche Additive und nur in solchen Mengen zugesetzt werden dürfen, wenn sie sich nicht signifikant negativ auf den erfindungsgemäßen Effekt der verbesserten Reflexion auswirken. Erfindungsgemäße Zusammensetzungen, die für Reflective White Anwendungen vorgesehen sind, enthalten daher z.B. bevorzugt keinen Ruß.

Besonders bevorzugt enthaltene Additive sind Thermostabilisatoren. Als Thermostabilisatoren sind insbesondere Phosphor-basierte Stabilisatoren, ausgewählt aus der Gruppe der Phosphate, Phosphite, Phosphonite, Phosphine und deren Mischungen, geeignet. Es können auch Mischungen von verschiedenen Verbindungen aus einer dieser Untergruppen eingesetzt werden, z.B. zwei Phosphite. Als Thermostabilisatoren werden bevorzugt Phosphor-Verbindungen mit der Oxidationszahl +III, insbesondere Phosphine und/oder Phosphite, eingesetzt. Als Thermostabilisatoren eignen sich besonders bevorzugt Triphenylphosphin, Tris-(2,4-di-tert-butylphenyl)phosphit (Irgafos^{®} 168), Tetrakis-(2,4-di-tert-butylphenyl)-[1,1-biphenyl]-4,4'-diylbisphosphonit (Hostanox^{®} P-EPQ), Octadecyl-3-(3,5-di-tert-butyl-4-hydroxyphenyl)-propionat (Irganox^{®} 1076), Bis-(2,4-dicumylphenyl)-pentaerythritoldiphosphit (Doverphos^{®} S-9228), Bis-(2,6-di-tert-butyl-4-methylphenyl)-pentaerythritoldiphosphit (ADK STAB PEP-36). Sie werden allein oder im Gemisch, z. B. Irganox^{®} B900 (Gemisch aus Irgafos^{®} 168 und Irganox^{®} 1076 im Verhältnis 4:1) oder Doveiphos^{®} S-9228 mit Irganox^{®} B900 bzw. Irganox^{®} 1076, eingesetzt. Die Thermostabilisatoren werden bevorzugt in Mengen bis zu 1,0 Gew.-%, weiter bevorzugt 0,003 Gew.-% bis 1,0 Gew.-%, noch weiter bevorzugt 0,005 Gew.-% bis 0,5 Gew.-%, besonders bevorzugt 0,01 Gew.-% bis 0,2 Gew.-%, eingesetzt.

Bevorzugte Additive sind auch spezielle UV-Absorber, die eine möglichst geringe Transmission unterhalb 400 nm und eine möglichst hohe Transmission oberhalb von 400 nm besitzen. Für den Einsatz in der erfindungsgemäßen Zusammensetzung besonders geeignete Ultraviolett-Absorber sind Benzotriazole, Triazine, Benzophenone und/oder arylierte Cyanoacrylate sowie Oxaldianilide. Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, BASF SE, Ludwigshafen), 2-(2'-Hydroxy-5'-(tert.-octyl)-phenyl)-benzotriazol (Tinuvin^{®} 329, BASF SE, Ludwigshafen), Bis-(3-(2H-benztriazolyl)-2-hydroxy-5-tert.-octyl)methan (Tinuvin^{®} 360, BASF SE, Ludwigshafen), 2-(4,6-Diphenyl-1,3,5-triazin-2-yl)-5-(hexyloxy)-phenol (Tinuvin^{®} 1577, BASF SE, Ludwigshafen), 2-(5chloro-2H-benzotriazol-2-yl)-6-(1,1-dimethylethyl)-4-methyl-phenol (Tinuvin^{®} 326, BASF SE, Ludwigshafen), sowie Benzophenone wie 2,4-Dihydroxybenzophenon (Chimasorb^{®} 22 , BASF SE, Ludwigshafen) und 2-Hydroxy-4-(octyloxy)-benzophenon (Chimassorb^{®} 81, BASF SE, Ludwigshafen), 2,2-Bis[[(2-cyano-1-oxo-3,3-diphenyl-2-propenyl)oxy]-methyl]-1,3-propandiylester (9CI) (Uvinul 3030, BASF SE, Ludwigshafen), 2-[2-Hydroxy-4-(2-ethylhexyl)oxy]phenyl-4,6-di(4-phenyl)phenyl-1,3,5-triazine (Tinuvin^{®} 1600, BASF SE, Ludwigshafen), Tetraethyl-2,2'-(1,4-phenylen-dimethyliden)-bismalonat (Hostavin B-Cap, Clariant AG) oder N-(2-Ethoxyphenyl)-N'-(2-ethylphenyl)-ethandiamid (Tinuvin^{®} 312, CAS-Nr. 23949-66-8, BASF SE, Ludwigshafen). Besonders bevorzugte spezielle UV-Stabilisatoren sind Tinuvin^{®} 360, Tinuvin^{®} 329, Tinuvin^{®} 326, Tinuvin^{®} 1600, Tinuvin^{®}312, Uvinul^{®} 3030 und/oder Hostavin B-Cap, ganz besonders bevorzugt sind Tinuvin^{®} 329 und Tinuvin^{®} 360 oder 2E,2'E)-2,4,8,10-tetraoxaspiro[5.5]undecane-3,9-diylbis(2-methylpropane-2,1-diyl) bis(2-cyano-3-(3,4-dimethoxyphenyl)acrylate (Chiguard^{®} GA 403) und 4,6-tris(2-hydroxy-4-hexyloxy-3-methylphenyl)-1,3,5-triazine (Adeka STAB LA-F70^{®})Es können auch Mischungen der genannten Ultraviolett-Absorber eingesetzt werden. Sofern UV-Absorber enthalten sind, enthält die Zusammensetzung bevorzugt Ultraviolett-Absorber in einer Menge bis 0,8 Gew.-%, bevorzugt 0,05 Gew.-% bis 0,5 Gew.-%, weiter bevorzugt 0,08 Gew.-% bis 0,4 Gew.-%, ganz besonders bevorzugt 0,1 Gew.-% bis 0,35 Gew.-%, bezogen auf die Gesamtzusammensetzung.

Die Zusammensetzungen können auch Phosphate oder Sulfonsäureester als Umesterungsinhibitoren enthalten. Bevorzugt ist Triisooctylphosphat als Umesterungsinhibitor enthalten. Triisooctylphosphat wird bevorzugt in Mengen von 0,003 Gew.-% bis 0,05 Gew.-%, weiter bevorzugt 0,005 Gew.-% bis 0,04 Gew.-% und besonders bevorzugt von 0,01 Gew.-% bis 0,03 Gew.-%, bezogen auf die Gesamtzusammensetzung, eingesetzt.

Beispiele für Schlagzähmodifikatoren sind: Kern-Schale-Polymerisate wie ABS oder MBS; Olefin-Acrylat-Copolymere wie z. B. Elvaloy^{®}-Typen von DuPont oder Paraloid^{®}-Typen von Dow; Siliconacrylatkautschuke wie z. B. die Metablen^{®}-Typen von Mitsubishi Rayon Co., Ltd.

Die als Antitropfmittel insbesondere bevorzugt eingesetzten fluorierten Polyolefine sind hochmolekular und besitzen Glasübergangstemperaturen von über -30°C, in der Regel von über 100°C, Fluorgehalte vorzugsweise von 65 Gew.-% bis 76 Gew.-%, insbesondere von 70 bis 76 Gew.-%. Bevorzugte fluorierte Polyolefine sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, No. 10 A, Oktober 1970, Mc Graw-Hill, Inc., New York, Seite 134 und 774; "Modern Plastics Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092). Sie können nach bekannten Verfahren hergestellt werden, so beispielsweise durch Polymerisation von Tetrafluorethylen in wässrigem Medium mit einem freie Radikale bildenden Katalysator, beispielsweise Natrium-, Kalium- oder Ammoniumperoxidisulfat bei Drucken von 7 bis 71 kg/cm² und bei Temperaturen von 0 bis 200°C, vorzugsweise bei Temperaturen von 20 bis 100°C. Nähere Einzelheiten sind z.B. in US 2 393 967 A beschrieben. Je nach Einsatzform kann die Dichte der fluorierten Polyolefine zwischen 1,2 und 2,3 g/cm³, bevorzugt 2,0 g/cm³ bis 2,3 g/cm³, bestimmt nach ISO 1183-1 (2019-09), die mittlere Teilchengröße zwischen 0,05 und 1000 µm, bestimmt mittels Lichtmikroskopie oder Weißlichtinterferometrie, liegen. Besonders bevorzugt wird Polytetrafluorethylen (PTFE) oder eine PTFE-haltige Zusammensetzung eingesetzt. PTFE ist in diversen Produktqualitäten kommerziell verfügbar. Hierzu zählen Hostaflon^{®} TF2021 oder aber PTFE-Blends wie Blendex^{®} B449 (ca. 50 Gew.-% PTFE und ca. 50 Gew.-% SAN [aus 80 Gew.-% Styrol und 20 Gew.-% Acrylnitril]) der Firma Chemtura. Bevorzugt wird Blendex^{®} B449 verwendet. Geeignete Tetrafluorethylenpolymerisat-Pulver sind auch handelsübliche Produkte und werden beispielsweise von der Firma DuPont unter dem Handelsnamen Teflon^{®} angeboten. Sofern ein oder mehrere Antitropfmittel enthalten sind, beträgt deren Gesamtmenge bevorzugt 0,1 Gew.-% bis 0,8 Gew.-%, insbesondere 0,10 Gew.-% bis 0,8 Gew.-%, weiter bevorzugt 0,15 Gew.-% bis 0,7 Gew.-%, besonders bevorzugt 0,4 Gew.-% bis 0,6 Gew.-%.

Füllstoffe verschieden von Komponente B können ebenfalls zugesetzt werden, sofern sie nach Art und Menge das Eigenschaftsniveau der vorliegenden Erfindung nicht beeinträchtigen. Diese können z.B. partikel-, schuppenförmigen oder faserförmigen Charakter haben. Beispielhaft seien an dieser Stelle Kreide, Bariumsulfat, Silikate/Aluminosilikate wie z.B. Wollastonit, Glimmer/Tonschichtmineralien, Montmorillonit, insbesondere auch in einer durch Ionenaustausch modifizierten, organophilen Form, Kaolin, Zeolithe, Vermiculit, Glasfasern, Carbonfasern, genannt. Es können auch Mischungen verschiedener anorganischer Materialien zum Einsatz kommen. Bei "Reflective White" Einstellungen ist der möglicherweise negative Einfluss dieser Füllstoffe auf die Reflexionseigenschaften besonders zu beachten, so dass diese Komponenten bei Reflective White Zusammensetzungen bevorzugt nicht enthalten sind.

Erfindungsgemäß bevorzugte thermoplastische Zusammensetzungen enthalten
A) mindestens 60 Gew.-% aromatisches Polycarbonat,
B) 1 bis 20 Gew.-% Zinksulfid,
C) 0,2 bis 2,5 Gew.-% mit Carbonsäureanhydrid modifiziertes Polyolefin mit einer Säurezahl von mindestens 40 mg KOH/g, bestimmt nach JIS K0070:1992-07-31.

Weiter bevorzugte erfindungsgemäße thermoplastische Zusammensetzungen enthalten
A) 65 bis 94,5 Gew.-% aromatisches Polycarbonat,
B) 5 bis 15 Gew.-% Zinksulfid,
C) 0,5 bis 2,0 Gew.-% mit Carbonsäureanhydrid modifiziertes Polyolefin mit einer Säurezahl von mindestens 40 mg KOH/g, bestimmt nach JIS K0070:1992-07-31.

Noch weiter bevorzugte erfindungsgemäße thermoplastische Zusammensetzungen bestehen aus
A) 65 bis 94,5 Gew.-% aromatischem Polycarbonat,
B) 5 bis 15 Gew.-% Zinksulfid,
C) 0,5 bis 2,5 Gew.-%, insbesondere bis 2,0 Gew.-%, mit Carbonsäureanhydrid modifiziertem Polyolefin mit einer Säurezahl von mindestens 40 mg KOH/g, bestimmt nach JIS K0070:1992-07-31,
D) optional einem oder mehreren weiteren Additiv(en), ausgewählt aus der Gruppe, bestehend aus Thermostabilisatoren, Antioxidantien, Entformungsmitteln, Antitropfmitteln, Flammschutzmitteln, UV-Absorbern, IR-Absorbern, Schlagzähmodifikatoren, Antistatika, optischen Aufhellern, von Komponente B verschiedenen Füllstoffen, Farbmitteln, Pigmenten, Lichtstreumitteln, Hydrolysestabilisatoren, Umesterungsinhibitoren, und/oder Additiven zur Lasermarkierung.

Ganz besonders bevorzugte erfindungsgemäße thermoplastische Zusammensetzungen bestehen aus
A) 65 bis 94,5 Gew.-% aromatischem Polycarbonat, wobei das Polycarbonat bevorzugt Bisphenol A-basiertes Polycarbonat umfasst,
B) 5 bis 15 Gew.-% Zinksulfid, wobei bevorzugt die mittlere Partikelgröße D₅₀ des Zinksulfids, bestimmt mittels Rasterelektronenmikroskopie (SEM), 0,1 µm bis 1,0 µm beträgt,
C) 0,5 bis < 2,0 Gew.-% mit Carbonsäureanhydrid modifiziertem Polyolefin mit einer Säurezahl von mindestens 40 mg KOH/g, bestimmt nach JIS K0070:1992-07-31, wobei Komponente C Maleinsäureanhydrid-modifiziertes Polyolefin umfasst,
D) optional einem oder mehreren weiteren Additiv(en), ausgewählt aus der Gruppe, bestehend aus Thermostabilisatoren, Antioxidantien, Entformungsmitteln, Antitropfmitteln, Flammschutzmitteln, UV-Absorbern, IR-Absorbern, Schlagzähmodifikatoren, Antistatika, optischen Aufhellern, von Komponente B verschiedenen Füllstoffen, Farbmitteln, Pigmenten, Lichtstreumitteln, Hydrolysestabilisatoren, Umesterungsinhibitoren, und/oder Additiven zur Lasermarkierung, wobei als weiteres Additiv mindestens ein Thermostabilisator enthalten ist.

Die Herstellung der erfindungsgemäßen thermoplastischen Zusammensetzungen, enthaltend die Komponenten A bis C und ggf. D sowie ggf. Blendpartner und ggf. weitere Bestandteile, erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen. Es können auch Vormischungen aus Granulaten oder Granulaten und Pulvern mit den Komponenten B, C, ggf. D sowie ggf. weitere Bestandteile, verwendet werden. Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind. Insbesondere können die als Komponente D bezeichneten Additive und auch weitere Bestandteile der erfindungsgemäßen Zusammensetzungen durch bekannte Verfahren oder als Masterbatch in das Polycarbonat, ggf. in das Polycarbonat mit Blendpartner, eingebracht werden. Die Verwendung von Masterbatchen ist insbesondere zum Einbringen von Additiven und weiteren Bestandteilen bevorzugt, wobei insbesondere Masterbatche auf Basis der jeweiligen Polymermatrix verwendet werden.

In diesem Zusammenhang kann die erfindungsgemäße Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann können die restlichen Ausgangsstoffe einzeln und/oder ebenfalls gemischt hinzugegeben werden.

Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

Die erfindungsgemäßen Zusammensetzungen können auf üblichen Maschinen, beispielsweise auf Extrudern oder Spritzgussmaschinen, zu beliebigen Formkörpern, wie beispielsweise Folien, Platten, Profilen, Rohren oder Flaschen, in üblicher Weise verarbeitet werden.

Die erfindungsgemäßen Zusammensetzungen sind zur Herstellung von Bauteilen im Beleuchtungssektor, wie etwa Reflektoren oder Teilen von Reflektoren von Lampen, insbesondere LED-Lampen oder LED-Arrays, im Automotive-Bereich, etwa für Blenden, Schalter, Scheinwerferreflektoren oder -rahmen, sowie zur Herstellung von Rahmen bzw. Rahmenteilen bzw. Gehäuse- oder Gehäuseteilen im EE (Elektro/Elektronik)- und IT-Bereich geeignet, auch im Indoor- und Outdoor-Beleuchtungsbereich sowie für Batteriegehäuse im Automobilbereich. Aufgrund der sehr guten Reflexionswerte werden die erfindungsgemäßen Zusammensetzungen bevorzugt zur Herstellung von Reflektoren für Beleuchtungseinheiten für In- und Outdoor-Anwendungen eingesetzt.

Diese und sonstige Formteile, bestehend aus den erfindungsgemäßen Zusammensetzungen oder umfassend - z.B. bei Mehrkomponentenspritzguss - diese, einschließlich der Formteile, die eine Schicht eines Mehrschichtsystems bzw. ein Element eines oben genannten Bauteils darstellen oder ein solches Bauteil sind, aus ("bestehend aus") diesen erfindungsgemäßen Zusammensetzungen, sind ebenfalls Gegenstand dieser Anmeldung. Die erfindungsgemäßen Zusammensetzungen sind auch in Form von Filamenten, als Granulat oder Pulver einsetzbar als Material im 3D-Druck.

Die für die erfindungsgemäßen Zusammensetzungen vorstehend beschriebenen Ausführungsformen gelten - soweit anwendbar - auch für die erfindungsgemäßen Verwendungen.

Die nachfolgenden Beispiele sollen die Erfindung illustrieren, ohne sie jedoch einzuschränken.

### Beispiele

### 1. Beschreibung der Rohstoffe und Prüfmethoden

Die in den folgenden Beispielen beschriebenen Polycarbonat-basierten Zusammensetzungen wurden auf einem Extruder ZE 25 der Fa. Berstorff mit einem Durchsatz von 10 kg/h durch Compoundierung hergestellt. Die Schmelzetemperatur betrug 275 °C.

### a) Rohstoffe

**Komponente A-1**: Lineares Polycarbonat auf Basis von Bisphenol A mit einer Schmelze-Volumenfließrate MVR von 19 cm³/(10 min) (gemäß ISO 1133:2012-03, bei einer Prüftemperatur 300°C und 1,2 kg Belastung), enthaltend 250 ppm Triphenylphosphin als Komponente **D-1** (nicht separat in den Tabellen aufgeführt).

**Komponente A-2:** Lineares Polycarbonat in Pulverform auf Basis von Bisphenol A mit einer Schmelze-Volumenfließrate MVR von 19 cm³/(10 min) (gemäß ISO 1133:2012-03, bei einer Prüftemperatur von 300°C und 1,2 kg Belastung).

**Komponente B-1**: Zinksulfid, CAS Nr.1314-98-3, der Firma Sigma Aldrich. Die Teilchengrößenverteilung wurde mittels Rasterelektronenmikroskopie (Scanning Electron Microscopy SEM) ermittelt. Verwendet wurde das Gerät Hitachi, SU5000, QS-No.: 03355; SOP 00013) mit einer Beschleunigungsspannung von 15 kV. Zur Bestimmung der Teilchengrößenverteilung wurde die ECD-Methode (Equivalent Circle Diameter) angewandt. Die Äquivalenz bezieht sich auf die Fläche eines Partikels. Der ECD-Wert ist der Durchmesser eines Kreises, der eine Fläche besitzt, die gleich der Fläche des Partikels ist.

Die kleinsten Partikel hatten eine Größe von 0,1 µm, die größten von 1,9 µm.Das arithmetische Mittel lag bei 0,4 µm, der Median bei 0,3 µm.Die Standardabweichung betrug 0,1 µm.Dabei waren 10% der Partikel kleiner 0,20 µm, 25% der Partikel kleiner 0,26 µm, 50% der Partikel kleiner 0,34 µm, 75% der Partikel kleiner 0,42 µm und 90% der Partikel kleiner 0,52 µm.

Die thermogravimetrische Untersuchung (Thermo Gravimetric Analysis TGA) ergab unter Luft bis 600°C einen Gewichtsverlust von 1,0% (Doppelbestimmung) und unter Stickstoff einen Gewichtsverlust von 0,3% bzw. 0,4% (Doppelbestimmung).

**Komponente C-1:** Ein Maleinsäureanhydrid-modifiziertes Polyolefin (Ethen:Propen:1-Octen, Gewichtsverhältnis 87:6:7) mit einem mittleren Molekulargewicht (Gelpermeationschromatographie in ortho-Dichlorbenzol bei 150 °C mit Polystyrolkalibrierung) M_{w} = 6301 g/mol, Mₙ = 1159 g/mol und mit einer Säurezahl von 53 mg KOH/g (Testmethode JIS K0070:1992-07-31). Maleinsäureanhydridanteil: 4,4 Gew.-%, bezogen auf das Gesamtgewicht des anhydridmodifizierten Polyolefins.

**Komponente C-2:** Ein Maleinsäureanhydrid-modifiziertes Polypropylen mit einem mittleren Molekulargewicht (Gelpermeationschromatographie in ortho-Dichlorbenzol bei 150 °C mit Polystyrolkalibrierung) M_{w} = 20.700 g/mol, Mₙ = 1460 g/mol und mit einer Säurezahl von 78 mg KOH/g (nach JIS K0070:1992-07-31).

**Komponente D-2:** Triisooctylphosphat der Firma Lanxess AG, Leverkusen.

**Komponente D-3:** Titandioxid Kronos 2230 der Firma Kronos Titan GmbH, Leverkusen.

### b) Prüfmethoden

Die Bestimmung der **Schmelze-Volumenfließrate** (MVR) erfolgte nach ISO 1133:2012-03 (überwiegend bei einer Prüftemperatur von 300 °C, Masse 1,2 kg) mit dem Gerät Zwick 4106 der Firma Zwick Roell. Zusätzlich wurde der MVR-Wert nach 19 Minuten Vorwärmzeit gemessen (IMVR19'). Dies ist ein Maß für die Schmelzestabilität unter erhöhtem thermischem Stress.

Die Bestimmung des **Asche-Gehaltes** erfolgte nach DIN 51903:2012-11 (850°C, 30 min halten).

Das totale Reflexionsspektrum wurde mit einem Spektralphotometer auf Basis der Norm ASTM E 1331-04 gemessen. Aus dem so erhaltenen Reflexionsspektrum wurde die visuelle Reflexion Ry (nach Lichtart D65, Beobachter 10°) nach ASTM E 308-08 berechnet. Die gilt auch für die Farbwerte L*a*b*. Die Dicke der Probekörper betrug 2 mm.

Der **Glanz** wurde nach ASTM D 523-14 bestimmt.

Der **Yellowness-Index** (Y.I.) wurde nach ASTM E 313-10 (Beobachter: 10° / Lichtart: D65) bestimmt.

Vergleichsversuche sind in den nachfolgenden Tabellen mit "V" gekennzeichnet, erfindungsgemäße Versuche mit "E".

**Tabelle 1:**

| **Komponente** | | | **V-1** | **V-2** | **V-3** | **E-4** | **E-5** | **E-6** |
|---|---|---|---|---|---|---|---|---|
| | | | Gew.-% | Gew.-% | Gew.-% | Gew.-% | Gew.-% | Gew.-% |
| **A-1** | | | 84,99 | 79,99 | 74,99 | 83,49 | 78,49 | 73,49 |
| A-2 | | | 10,00 | 10,00 | 10,00 | 10,00 | 10,00 | 10,00 |
| **B-1** | | | 5,00 | 10,00 | 15,00 | 5,00 | 10,00 | 15,00 |
| **C-1** | | | | | | 1,50 | 1,50 | 1,50 |
| **D-2** | | | 0,01 | 0,01 | 0,01 | 0,01 | 0,01 | 0,01 |

| **Prüfung** | **Bedingung** | **Norm/Einheit** | | | | | | |
|---|---|---|---|---|---|---|---|---|
| Asche-Gehalt (Mittelwert) (ro) | 850 °C; 0,5 h | % | 4,13 | 8,21 | 12,43 | 4,26 | 8,04 | 12,27 |
| MVR | 300 °C; 1,20 kg; 6 min | cm³/[10min] | 54,1 | 93,8 | 134,7 | 19,3 | 18 | 15,9 |
| IMVR | 300 °C; 1,20 kg; 19 min | cm³/[10min] | 82,8 | * | * | 19,3 | 18,3 | 16,4 |
| **Reflexion (normale Reflexion)** | Hunter UltraScanPRO , diffus/8°; D65; 10° | ASTM E 1331 mit Glanz | | | | | | |
| Probendicke (ro) | | mm | 2 | 2 | 2 | 2 | 2 | 2 |
| L* (ro) | | | 94,19 | 94,72 | 94,63 | 95,56 | 96,05 | 96,08 |
| a* (ro) | | | 0,18 | 0,02 | -0,05 | -1,16 | -1,18 | -1,13 |
| b* (ro) | | | 2,7 | 2,45 | 2,43 | 2,69 | 2,62 | 2,56 |
| Reflexion (ro) | | % | 85,72 | 86,97 | 86,74 | 88,96 | 90,13 | 90,2 |
| Yellowness-Index (ro) | | | 5,3 | 4,68 | 4,6 | 4,19 | 4,03 | 3,95 |
| Glanz 60° | | | 101 | 99 | 95 | 99 | 100 | 100 |

| | | | | | | | | |
|---|---|---|---|---|---|---|---|---|
| * zu dünnflüssig, Messung nicht möglich | | | | | | | | |

Mit zunehmender Menge an Zinksulfid nimmt der Polymerabbau zu und die Schmelzestabilität ab (MVR und IMVR). Die Zugabe von Komponente C-1 aber führt zu einer deutlichen Erhöhung der Schmelzestabilität und der Polymerabbau ist praktisch unterbunden im Vergleich zu V-1 bis V-3, die die Komponente C-1 nicht enthalten. Gleichzeitig steigt die Reflexion und der Y.I. wird reduziert.

**Tabelle 2:**

| **Komponente** | | | **V-7** | **V-8** | **E-9** | **E-10** |
|---|---|---|---|---|---|---|
| | | | Gew.-% | Gew.-% | Gew.-% | Gew.-% |
| **A-1** | | | 75,00 | 70,00 | 73,50 | 68,50 |
| **A-2** | | | 10,00 | 10,00 | 10,00 | 10,00 |
| **B-1** | | | 10,00 | 10,00 | 10,00 | 10,00 |
| **C-1** | | | | | 1,50 | 1,50 |
| **D-3** | | | 5,0 | 10,0 | 5,0 | 10,0 |

| **Prüfung** | **Bedingung** | **Norm/Exnheit** | | | | |
|---|---|---|---|---|---|---|
| Asche-Gehalt (Mittelwert) (ro) | 850 °C; 0,5 h | % | 12,98 | 18,3 | 13,17 | 18,02 |
| MVR | 300 °C; 1,20 kg; 6 min | cm³/[10min] | 153,0 | * | 17,4 | 15,5 |
| IMVR | 300 °C; 1,20 kg; 19 min | cm³/[10min] | * | * | 18,2 | 18,6 |
| **Reflexion (normale Reflexion)** | Hunter UltraScanPRO , diffus/8°; D65; 10° | ASTM E 1331 mit Glanz | | | | |
| Probendicke (ro) | | mm | 2 | 2 | 2 | 2 |
| L* (ro) | | | 96,79 | 97,26 | 97,64 | 97,9 |
| a* (ro) | | | -0,82 | -0,89 | -1,15 | -1,08 |
| b* (ro) | | | 2,57 | 2,72 | 2,02 | 1,95 |
| Reflexion (ro) | | % | 91,93 | 93,08 | 94,03 | 94,66 |
| Yellowness-Index (ro) | | | 4,19 | 4,39 | 2,89 | 2,81 |
| Glanz 60° | | | 97 | 96 | 102 | 101 |

| | | | | | | |
|---|---|---|---|---|---|---|
| * zu dünnflüssig, keine Messung möglich | | | | | | |

Die Zugabe von Komponente C-1 in E-9 und E-10 führt zu einer deutlichen Erhöhung der Schmelzestabilität und der Polymerabbau ist praktisch unterbunden im Vergleich zu V-7 und V-8, die die Komponente C-1 nicht enthalten. Gleichzeitig steigt die Reflexion und der Y.I. wird reduziert.

**Tabelle 3:**

| **Kompon ente** | | | **V-11** | **V-12** | **E-13** | **E-14** |
|---|---|---|---|---|---|---|
| | | | Gew.-% | Gew.-% | Gew.-% | Gew.-% |
| **A-1** | | | 83,00 | 83,00 | 83,00 | 83,00 |
| A-2 | | | 7,00 | 6,50 | 6,00 | 5,00 |
| **B-1** | | | 10,00 | 10,00 | 10,00 | 10,00 |
| **C-1** | | | | 0,50 | 1,00 | 2,00 |

| **Prüfung** | **Bedingung** | **Norm/Einheit** | | | | |
|---|---|---|---|---|---|---|
| Asche-Gehalt (Mittelwert) (ro) | 850 °C; 0,5 h | % | 8,21 | 8,16 | 8,27 | 8,22 |
| MVR | 300 °C; 1,20 kg; 6 min | cm³/[10min] | 52,5 | 24,1 | 18,1 | 20,8 |
| IMVR | 300 °C; 1,20 kg; 19 min | cm³/[10min] | 0,0 | 31,4 | 18,2 | 20,8 |
| **Reflexion (normale Reflexion)** | Hunter UltraScanPRO , diffus/8°; D65; 10° | ASTM E 1331 mit Glanz | | | | |
| Probendicke (ro) | | mm | 2 | 2 | 2 | 2 |
| L* (ro) | | | 94,86 | 95,78 | 96,16 | 96,28 |
| a* (ro) | | | -0,36 | -0,72 | -0,92 | -1,11 |
| b* (ro) | | | 2,68 | 2,67 | 2,31 | 2,61 |
| Reflexion (ro) | | % | 87,28 | 89,48 | 90,39 | 90,67 |
| Yellowness-Index (ro) | | | 4,82 | 4,48 | 3,65 | 4,05 |
| Glanz 60° | | | 95 | 98 | 100 | 97 |

| | | | | | | |
|---|---|---|---|---|---|---|
| * zu dünnflüssig | | | | | | |

Die Zugabe von Komponente C-1 in E-13 und E-14 führt zu einer deutlichen Erhöhung der Schmelzestabilität und der Polymerabbau ist praktisch unterbunden im Vergleich zu V-11 und V-12, die die Komponente C-1 nicht enthalten. Gleichzeitig steigt die Reflexion und der Y.I. wird reduziert.

**Tabelle 4:**

| **Komponente** | | | **V-15** | **V-16** | **V-17** | **E-18** | **E-19** | **E-20** |
|---|---|---|---|---|---|---|---|---|
| | | | Gew.-% | Gew.-% | Gew.-% | Gew.-% | Gew.-% | Gew.-% |
| **A-1** | | | 85,00 | 80,00 | 75,00 | 84,20 | 79,20 | 74,20 |
| **A-2** | | | 10,00 | 10,00 | 10,00 | 10,00 | 10,00 | 10,00 |
| **B-1** | | | 5,00 | 10,00 | 15,00 | 5,00 | 10,00 | 15,00 |
| **C-2** | | | | | | 0,80 | 0,80 | 0,80 |

| **Prüfung** | **Bedingung** | **Norm/Einheit** | | | | | | |
|---|---|---|---|---|---|---|---|---|
| Asche-Gehalt (Mittelwert) (ro) | 850 °C; 0,5 h | % | 4,19 | 8,23 | 12,57 | 4,24 | 8,29 | 12,44 |
| MVR | 300 °C; 1,20 kg; 6 min | cm³/[10min] | 71,8 | > 100* | > 100* | 17,9 | 17,6 | 16,4 |
| IMVR | 300 °C; 1,20 kg; 19 min | cm³/[10min] | > 100* | > 100* | > 100* | 18,8 | 18,2 | 17,6 |
| **Reflexion (normale Reflexion)** | Hunter UltraScanPRO , diffus/8°; D65; 10° | ASTM E 1331 mit Glanz | | | | | | |
| Probendicke (ro) | | mm | 2 | 2 | 2 | 2 | 2 | 2 |
| L* (ro) | | | 94,98 | 95,09 | 95,17 | 96,16 | 96,64 | 96,66 |
| a* (ro) | | | -0,41 | -0,35 | -0,38 | -1,1 | -1,11 | -1,08 |
| b* (ro) | | | 2,58 | 2,61 | 2,51 | 2,86 | 2,49 | 2,25 |
| Reflexion (ro) | | % | 87,58 | 87,82 | 88,01 | 90,38 | 91,57 | 91,61 |
| Yellowness-Index (ro) | | | 4,58 | 4,69 | 4,48 | 4,53 | 3,81 | 3,39 |
| Glanz 60° | | | 101 | 98 | 94 | 102 | 102 | 100 |

| | | | | | | | | |
|---|---|---|---|---|---|---|---|---|
| * zu dünnflüssig, Messung nicht möglich | | | | | | | | |

Die Zugabe von Komponente C-2 in E-18 bis E-20 führt zu einer deutlichen Erhöhung der Schmelzestabilität und der Polymerabbau ist praktisch unterbunden im Vergleich zu V-15 bis V-17, die die Komponente C-2 nicht enthalten. Gleichzeitig steigt die Reflexion und der Y.I. wird reduziert.

**Tabelle 5:**

| **Komponente** | | | **V-21** | **E-22** | **E-23** | |
|---|---|---|---|---|---|---|
| | | | Gew.-% | Gew.-% | Gew.-% | Gew.-% |
| **A-1** | | | 83,00 | 83,00 | 83,00 | 83,00 |
| **A-2** | | | 7,00 | 6,50 | 5,50 | 5,00 |
| **B-1** | | | 10,00 | 10,00 | 10,00 | 10,00 |
| **C-2** | | | | 0,50 | 1,50 | 2,00 |

| **Prüfung** | **Bedingung** | **Norm/Einheit** | | | | |
|---|---|---|---|---|---|---|
| Asche-Gehalt (Mittelwert) (ro) | 850 °C; 0,5 h | % | 8,21 | 8,04 | 8,27 | 8,33 |
| MVR | 300 ° C; 1,20 kg; 6 min | cm³/[10min] | 52,5 | 17,6 | 18,2 | 19,6 |
| IMVR | 300 °C; 1,20 kg; 19 min | cm³/[10min] | * | 18,8 | 18,5 | 20,7 |
| **Reflexion (normale Reflexion)** | Hunter UltraScanPRO , diffus/8°; D65; 10° | ASTM E 1331 mit Glanz | | | | |
| Probendicke (ro) | | mm | 2 | 2 | 2 | 2 |
| L* (ro) | | | 94,86 | 96,39 | 95,94 | 96,04 |
| a* (ro) | | | -0,36 | -1,04 | -0,97 | -1,08 |
| b* (ro) | | | 2,68 | 2,35 | 2,95 | 2,97 |
| Reflexion (ro) | | % | 87,28 | 90,96 | 89,87 | 90,1 |
| Yellowness-Index (ro) | | | 4,82 | 3,62 | 4,82 | 4,76 |
| Glanz 60° | | | 95 | 99 | 98 | 97 |

| | | | | | | |
|---|---|---|---|---|---|---|
| * zu dünnflüssig, keine Messung möglich | | | | | | |

Die Zugabe von Komponente C-2 in E-22 bis E-24 führt zu einer deutlichen Erhöhung der Schmelzestabilität und der Polymerabbau ist praktisch unterbunden im Vergleich zu V-21, der die Komponente C-1 nicht enthält. Gleichzeitig steigt die Reflexion.

## Patentansprüche

1. Verwendung von mit Carbonsäureanhydrid modifiziertem Polyolefin mit einer Säurezahl von mindestens 40 mg KOH/g, bestimmt nach JIS K0070:1992-07-31, zur Verbesserung der Schmelzestabilität und/oder
zur Reduzierung der Schmelzeviskosität
einer Zinksulfid-haltigen Polycarbonat-Zusammensetzung im Vergleich zur einer Polycarbonatzusammensetzung, die das mit Carbonsäureanhydrid modifizierte Polyolefin nicht enthält.

2. Thermoplastische Zusammensetzung, enthaltend
A) aromatisches Polycarbonat,
B) Zinksulfid,
C) mit Carbonsäureanhydrid modifiziertes Polyolefin mit einer Säurezahl von mindestens 40 mg KOH/g, bestimmt nach JIS K0070:1992-07-31,
D) optional ein oder mehrere weitere Additive.

3. Thermoplastische Zusammensetzung nach Anspruch 2, enthaltend
A) mindestens 60 Gew.-% aromatisches Polycarbonat,
B) 1 bis 20 Gew.-% Zinksulfid,
C) 0,2 bis 2,5 Gew.-% mit Carbonsäureanhydrid modifiziertes Polyolefin mit einer Säurezahl von mindestens 40 mg KOH/g, bestimmt nach JIS K0070:1992-07-31,
D) optional ein oder mehrere weitere Additive.

4. Thermoplastische Zusammensetzung nach Anspruch 2 oder 3, enthaltend
A) 65 bis 94,5 Gew.-% aromatisches Polycarbonat,
B) 5 bis 15 Gew.-% Zinksulfid,
C) 0,5 bis 2,0 Gew.-% mit Carbonsäureanhydrid modifiziertes Polyolefin mit einer Säurezahl von mindestens 40 mg KOH/g, bestimmt nach JIS K0070:1992-07-31,
D) optional ein oder mehrere weitere Additive.

5. Thermoplastische Zusammensetzung nach einem der Ansprüche 2 bis 4, wobei Komponente C mit Maleinsäureanhydrid gepfropftes Polyolefin umfasst.

6. Thermoplastische Zusammensetzung nach einem der Ansprüche 2 bis 5, wobei Komponente C mit Maleinsäureanhydrid gepfropftes Polypropylen umfasst.

7. Thermoplastische Zusammensetzung nach Anspruch 6, wobei das gewichtsmittlere Molekulargewicht M_{w} des Maleinsäureanhydrid-modifizierten Polypropylens 18000 bis 25000 g/mol, bestimmt durch Gelpermeationschromatographie in ortho-Dichlorbenzol bei 150 °C mit Polystyrolkalibrierung, beträgt.

8. Thermoplastische Zusammensetzung nach einem der Ansprüche 2 bis 7, wobei Komponente C Maleinsäureanhydrid-modifiziertes Ethylen-Propylen-1-Octen-Polymer umfasst.

9. Thermoplastische Zusammensetzung nach Anspruch 8, wobei das gewichtsmittlere Molekulargewicht M_{w} des Maleinsäureanhydrid-modifizierten Ethylen-Propylen-1-Octen-Polymers 4000 bis 10000 g/mol, bestimmt durch Gelpermeationschromatographie in ortho-Dichlorbenzol bei 150 °C mit Polystyrolkalibrierung, beträgt.

10. Thermoplastische Zusammensetzung nach einem der vorhergehenden Ansprüche, bestehend aus den Komponenten A bis D und ggf. Blendpartnern.

11. Thermoplastische Zusammensetzung nach einem der vorhergehenden Ansprüche bestehend aus
A) 65 bis 94,5 Gew.-% aromatischem Polycarbonat,
B) 5 bis 15 Gew.-% Zinksulfid,
C) 0,5 bis 2,0 Gew.-% mit Carbonsäureanhydrid modifiziertem Polyolefin mit einer Säurezahl von mindestens 40 mg KOH/g, bestimmt nach JIS K0070:1992-07-31,
D) optional einem oder mehreren weiteren Additiven, ausgewählt aus der Gruppe, bestehend aus Thermostabilisatoren, Antioxidantien, Entformungsmitteln, Antitropfmitteln, Flammschutzmitteln, UV-Absorbern, IR-Absorbern, Schlagzähmodifikatoren, Antistatika, optischen Aufhellern, von Komponente B verschiedenen Füllstoffen, Lichtstreumitteln, Hydrolysestabilisatoren, Umesterungsinhibitoren und/oder Additiven zur Lasermarkierung.

12. Thermoplastische Zusammensetzung nach einem der Ansprüche 2 bis 11 oder Verwendung nach Anspruch 1, wobei das Polycarbonat Bisphenol A-basiertes Polycarbonat ist.

13. Zusammensetzung nach einem der Ansprüche 2 bis 12 oder Verwendung nach Anspruch 1, wobei der D₅₀-Wert des Zinksulfids, bestimmt mittels Rasterelektronenmikroskopie, 0,1 bis 1,0 µm beträgt.

14. Formteil aus einer oder umfassend Bereiche aus einer Zusammensetzung nach einem der Ansprüche 2 bis 12.

15. Formteil nach Anspruch 14, wobei das Formteil ein Reflektor für den Beleuchtungsbereich oder Automobilbereich, ein Gehäuseteil im Elektro/Elektronikbereich, ein Gehäuseteil für den Haushaltsgerätebereich ist.
